# NEW EUROPEAN PATENT SPECIFICATION

(11) **EP 2 204 334 B2**
(45) Date of publication and mention of the opposition decision: **19.04.2017**
(45) Mention of the grant of the patent: 19.12.2012
(21) Application number: 08840282.1
(22) Date of filing: 16.10.2008
(51) Int. Cl.: B65D 65/46, C08J 5/18, C08L 29/04, C08K 3/00, C08K 3/22, C08K 3/26

(54) **USE OF A WATER-SOLUBLE SEALING PACKAGING MATERIAL FOR SEALING A HALOGEN-CONTAINING MÉDICAMENT**
VERWENDUNG EINES WASSERLÖSLICHEN VERPACKUNGSMATERIALS ZUR VERSIEGELUNG EINES HALOGENHALTIGEN MEDIKAMENTS
UTILISATION D`UN MATÉRIAU D`EMBALLAGE SOLUBLE DANS L`EAU POUR SCELLER UN MEDICAMENT HALOGÉNÉ

(30) Priority: 18.10.2007 JP 2007271545
(43) Date of publication of application: 07.07.2010
(73) Proprietor: Aicello Corporation, Toyohashi-shi, Aichi 441-1115 (JP)
(72) Inventor: ANDO, Keisuke, Toyohashi-shi Aichi 441-1115 (JP); GOTO, Yasumasa, Toyohashi-shi Aichi 441-1115 (JP); ITO, Katsuhito, Toyohashi-shi Aichi 441-1115 (JP)
(74) Representative: dompatent von Kreisler Selting Werner - Partnerschaft von Patent- und Rechtsanwälten mbB
(86) International application number: PCT/JP2008/068740
(87) International publication number: WO 2009/051173

(56) References cited:
- EP-B1- 0 291 198
- EP-B1- 0 301 509
- EP-B1- 0 892 744
- WO-A1-01/25142
- WO-A1-96/19529
- JP-A- 2002 053 674
- JP-A- 2003 261 694
- JP-A- 2006 089 538
- US-A- 4 299 759
- US-A1- 2002 182 348
- US-A1- 2002 182 348
- US-A1- 2004 192 569
- US-A1- 2007 161 727
- US-A1- 2007 259 996
- US-B1- 7 026 375
- US-B2- 6 803 401
- DE ROY ET AL.: 'Layered Double Hydroxides: Present and Future', vol. CHAPTER1, 2001, NOVA SCIENCE PUBLISHER, INC. pages 1 - 37
- "Halogen Scavenger DHT-4A" Kyowa Chemical Industry Co., Ltd., Kisuma Chemicals B.V. 2002.5.2000

## Description

### Technical Field

The present invention relates to **the use of** a water-soluble sealing packaging material for sealing of a medicament such as fungicide and detergent comprising, in particular, a chlorine-containing compound or bromine-containing compound.

### Background of the Invention

An individual packaging material for sealing and packaging of a single dose of a medicament such as detergent, cleaning agents, fungicide, insecticide, herbicide, fertilizer and dyestuff has been widely used.

When such medicament is sealed in a water-soluble sealing packaging material such as a bag made of a water-soluble resin film and a molded container made from a water-soluble resin, the medicament can be dissolved or dispersed in water only by putting the water-soluble sealing packaging material into water without opening thereof and taking out the medicament. Therefore, when the water-soluble sealing packaging material is used, a powdered medicament, which can be harmful to workers' health when they inhale the powdered medicament that flew into the air and can contaminate the work environment, or a solid or liquid medicament, which damages the skin of workers when they directly contact it, can be safely handled. In addition, when an appropriate amount of the medicament is previously sealed within an individual packaging material, a single dose of the medicament can be simply controlled, being able to improve work efficiency.

Medicaments such as fungicide, cleaning agents and agricultural chemicals usually contain a chlorine-containing compound or bromine-containing compound. Therefore, a water-soluble sealing packaging material is desired to be used for packaging such medicaments in view of the workers' safety and environmental preservation. However, when such medicaments are stored within the water-soluble sealing packaging material for a long period of time, the packaging material itself deteriorates under the influence of chlorine or bromine therein and becomes hardly soluble or insoluble in water.

In order to avoid such deterioration, a film for use in packaging a chlorine-containing substance is disclosed in Japanese Unexamined Patent Publication No.09-316270. This packaging film comprises a polyvinyl alcohol resin and a radical scavenger such as hydroquinone, hydroquinone monomethylether and p-tert-butylcatechol. Hydroquinone is classified as the first class substance under the PRTR (Pollutant Release and Transfer Register) system under which an environmental pollutant, which is discharged or transported from various discharging sources and is potentially harmful, should be notified to administrative organs. In a case where hydroquinone is used in cosmetics to be directly applied on the skin, hydroquinone should be included in the cosmetics at a low concentration of 2% or less. Hydroquinone in high concentration causes irritation to the skin, so it is a substance dangerous to directly touch the bulk powder thereof.

In Japanese Unexamined Patent Publication No.2003-104435, a film for use in packaging a chlorine-containing substance is disclosed. This packaging film comprises a modified polyvinyl alcohol with additional gallic acid or propyl gallate. In Japanese Unexamined Patent Publication No.11-222546, a film for use in packaging a chlorine-containing substance is disclosed. This packaging film comprises a modified polyvinyl alcohol having a sulfonic acid group with additional gallic acid or propyl gallate. Gallic acid and propyl gallate are substances that could cause allergy symptoms, and manufacturers are required to attach a label to indicate that the goods contain such substances.

A container for an individual package has been desired, which does not contain a controlled substance and does not become hardly soluble or insoluble in water even if a medicament, or in particular a halogen-containing medicament is sealed in the container and is stored for a long period of time.

### Summary of the Invention

The present invention was developed to solve the aforementioned problems and to provide **the use of** a water-soluble sealing packaging material having excellent halogen resistance which can seal a medicament to be dispersed or dissolved in water, does not contain a substance potentially detrimental to human health, can be used safely and securely, does not deteriorate and maintains solubility in water even if a medicament, especially a medicament comprising chlorine-containing compound or bromine-containing compound, is sealed by the packaging material and stored for a long period of time.

The water-soluble sealing packaging material for sealing a halogen-containing medicament was developed to accomplish the aforementioned objects comprises;
a packaging raw material according to claim 1 that comprises 100 parts by weight of a polyvinyl alcohol resin and 01 to 100 parts by weight of a hydrotalcite compound.

In the water-soluble sealing packaging material, the inorganic hydrotalcite compound is represented by the following chemical formula (1)

MₚAl₂(OH)_{2p+b-2q}A_{q} · rH₂O (1)

wherein, in the formula (1), M is magnesium, calcium and/or zinc; p and q are each positive number under the condition of 2p+6-2q>0; r is 0 or a positive number; and A is CO₃ or HPO₄.

In the water-soluble sealing packaging material, the packaging material may be a bag formed by fusion-bonding or adhering of a film as the packaging raw material at a circumference thereof to have a bag-like shape for sealing the medicament, or a container formed by molding of the packaging raw material to have a cavity for sealing the medicament.

In the water-soluble sealing packaging material, the medicament may include a chlorine-containing compound or a bromine-containing compound.

The water-soluble sealing packaging material is easily soluble in water and therefore is quickly dissolved into water when put into water, so the halogen-containing medicament sealed by the packaging material is released into water and then easily dispersed or dissolved.

Readily-solubility of the water-soluble sealing packaging material in water remains intact even if a halogen-containing medicament such as chlorine-containing compound or bromine-containing compound is sealed by the water-soluble sealing packaging material and stored for a long period of time.

In addition, the water-soluble sealing packaging material does not contain a substance potentially harmful to human health so that the packaging material can be used safely. Therefore, the water-soluble sealing packaging material can be widely used for sealing of such everyday-use medicaments such as detergent, drug medicines, industrial chemicals and coating agents.

The water-soluble sealing packaging material is suitable for packaging and sealing of the medicaments when used in the form of flexible films or in the form of a flexible or inflexible container. It can be used for individual packaging, being convenient for workers, users or inventory controllers.

Preferred embodiment of the water-soluble sealing packaging material is formed of a water-soluble film comprising a polyvinyl alcohol resin and the hydrotalcite compound (1). The water-soluble sealing packaging material is formed of the film which is fusion-bonded or adhered at its circumference, thereby forming into a bag-like shape into which the halogen-containing medicament is placed and sealed.

The water-soluble sealing packaging material is manufactured as follows. The polyvinyl alcohol resin and the hydrotalcite compound are mixed and kneaded to obtain a resin composition which is then formed into a film using, for example, an extruder. The resulting film is cut into an appropriate size, and two of them are superposed to each other and then the three sides thereof are fusion-bonded or adhered to form a bag-like shape. The bag is filled with a halogen-containing medicament, and then one remained side is fusion-bonded or adhered to seal the bag, obtaining a medicament sealed and packaged by the water-soluble sealing packaging material.

In the above-mentioned embodiment, the water-soluble sealing packaging material is formed into a bag-like shape as an example, but it may be formed into a container having a cylinder-shape, barrel-shape, bottle-shape or spindle-shape.

In the above embodiment, the hydrotalcite compound is exemplified as the inorganic compound.

The hydrotalcite compounds are a hydrotalcite represented by the formula of Mg₆Al₂(OH)₁₆CO₃ · 4H₂O or hydrotalcites represented by the same formula but Mg, OH and CO₃ are each substituted with another substance or group and further the amount of crystal water can be increased or decreased. More specifically, a substance represented by the following formula (1) is preferably used.

MₚAl₂(OH)_{2p+6-2q}A_{q} · rH₂O (1)

In the formula (1), M is magnesium, calcium and/or zinc; p and q are each positive number under a condition of 2p+6-2q>0; r is 0 or a positive number; and A is CO₃ or HPO₄. Preferably, a compound of the formula in which M is magnesium and A is CO₃ is used. Still more preferably, p is 4 to 8 and q is 0.5 to 2. More preferably, r is 0 to 20.

The hydrotalcite compound is a layered double hydroxide having an anion exchange capability and can intercalate water molecules or ions.

The particle diameter of these inorganic compounds is preferably 20µm or less to obtain sufficient dispersibility in the polyvinyl alcohol resin.

Furthermore, the additive amount of the inorganic compounds is preferably 0.1 to 100 parts by weight with respect to 100 parts by weight of the polyvinyl alcohol resin. If the additive amount is less than 0.1 parts by weight, chlorine resistance or bromine resistance of the obtained film or container which is the water-soluble sealing packaging material, is lowered. On the other hand, if over 100 parts by weight of the inorganic compounds is added, the mechanical properties and practical strength of the water-soluble sealing packaging material deteriorates, and thus the packaging material becomes brittle.

These inorganic compounds have an important roll in improving resistance to halogen such as chlorine resistance or bromine resistance.

When such inorganic compound with appropriate particle diameter is added in an appropriate amount of the polyvinyl alcohol resin, physical properties of the obtained film or a water-soluble sealing container fulfill the required practical mechanical strength. Further, because the inorganic compound is safe, problems do not occur from the un-dissolved inorganic remains contained in the water-soluble sealing packaging material when the packaging material is put into water.

The polyvinyl alcohol resin can be polyvinyl alcohol, vinyl alcohol copolymers, their derivatives or a mixture thereof.

Concerning polyvinyl alcohol, preferably its saponification degree is 70% by mole or more and polymerization degree is 300 or more, still more preferably, its saponication degree is 75% by mole or more and the polymerization degree is 500 or more. If the polymerization degree is less than 300, mechanical properties of the film tends to become lower, and if the saponification degree is lower than 70% by mole, water solubility is likely to be deteriorated. The polymerization degree may be 5,000 at most.

As for the vinyl alcohol copolymer, a saponified polymer derived from an unsaturated carboxylic acid-vinyl acetate copolymer can be exemplified. In that case, acrylic acid, maleic acid, itaconic acid, fumaric acid, sulfone acid, allyl acetate, etc. can be exemplified as the unsaturated carboxylic acid.

As other polyvinyl alcohol derivatives, ester compounds which are obtained by esterfication of the above-mentioned polyvinyl alcohol or vinyl alcohol copolymer with an acid anhydride such as succinic anhydride, phthalic anhydride and maleic anhydride can be exemplified.

If necessary, a plasticizer may be added to the polyvinyl alcohol resin. As a desirable plasticizer, glycerin, ethylene glycol, diethylene glycol, triethylene glycol, polyethylene glycol, poly glycerol, tetraethylene glycol, 1,3-butanediol, erythritol, xylitol, sorbitol, glucose, fructose, lactose, triethanolamine, triethanolamine acetate, ethanol acetamid, etc., can be exemplified.

The water-soluble sealing packaging materials such as the films can be manufactured from a resin composition comprising the polyvinyl alcohol resin and the inorganic compound by using known methods such as a casting method, a hydrous-extrusion method and a melt-extrusion method.

In the water-soluble sealing packaging material, other water-soluble polymers such as cellulose and starch can be included in a range without deteriorating the physical properties thereof, and other general-purpose ingredients such as surfactants, artificial colors, fragrances and inorganic filler can be included.

As the halogen-containing medicament which is sealed in the water-soluble sealing packaging material, chlorine-containing compounds and bromine-containing compounds can be exemplified. More specifically, fungicides such as a disinfectant and water treatment agents for swimming pools, bathhouses and spas (multifunctional bathes); bleachs for household use; cleaning agents for bathrooms and kitchens; agricultural chemicals such as insecticide, chemical herbicide and fertilizers; industrial medicaments such as dyestuff; coating agents such as dispersive agents and colorants for water-based paints, can be exemplified. More specifically, a medicament containing trichloroisocyanuric acid, dichloroisocyanuric acid or the salt thereof, monochloroisocyanuric acid or the salt thereof; hypochlorous acid or the salt thereof; trichloromelamine; N-bromo-N-chloro-5,5-dimethyl hydantoin, N,N-dibromo-N-nitrilopropionamide or the like as a major ingredient, can be exemplified. The shape of the halogen-containing medicament can be granules, tablets such as a sickness tablet and powders or in some cases, a non-aqueous liquid. Furthermore, the water-soluble sealing packaging material can be used for sealing and packaging of another medicament other than the halogen-containing medicaments.

In the case where the water-soluble sealing packaging material such as the film comprising polyvinyl alcohol resin and an inorganic compound is used for packaging a medicament containing a chlorine-containing compound or bromine-containing compound, mechanism of water-solubility of the film or container is not yet clarified, but following mechanism can be presumed.

If the medicament is packaged and stored in a container or package made of only the polyvinyl alcohol resin, a chlorine radical or bromine radical generated from the chlorine-containing substance or bromine-containing substance may abstract hydrogen atoms from the hydroxyl groups in a main chain of the polyvinyl alcohol to form ketones, or may form a new three dimensional cross-linking structure derived from the hydroxyl groups, thereby likely achieving a decrease in solubility in water.

On the contrary, in the present invention, the water-soluble sealing packaging material comprises the polyvinyl alcohol resin and the inorganic compound such as the hydrotalcite compound, the carbonate having the metals such as IIa group metal and IIb group metal of the periodical table, the oxide of the metals and the hydroxide of the metals, so the inorganic compound probably scavenges and deactivates chlorine radicals or bromine radicals generated from the halogen-containing medicament such as the chlorine-containing compound or bromine-containing compound, thereby probably keeping the water-soluble sealing packaging material from becoming insoluble in water and retaining the chlorine resistance or bromine resistance properties. At the same time, chloride ion and chlorine generated from the chlorine-containing compound as the halogen-containing medicament, or bromide ion and bromine generated from the bromine-containing compound as the halogen-containing medicament are deactivated, thereby exerting the same effects as described above.

Hereunder, the water-soluble sealing packaging material will be shown with reference to Examples 1 to 4. And the water-soluble sealing packaging material outside the present invention will be shown in Comparative Examples 1 and 2.

### (Example 1)

To 100 parts by weight of a partially saponified polyvinyl alcohol, which is available from Japan Vam & Poval Co., Ltd., (polymerization degree: 1,800, saponification degree: 85% by mole), 0.1 parts by weight of Mg₆Al₂(OH)₁₆CO₃ 4H₂O, which is available from Wako Pure Chemical Industries, Ltd., as a hydrotalcite compound was added, then Sample 1 as a film having a thickness of 40µm was manufactured using a casting method. Samples 2 to 4 were manufactured in a similar manner to Sample 1 except that the amount of hydrotalcite compound was changed to 1, 10 and 100 parts by weight respectively.

### (Example 2) (Reference Example)

To 100 parts by weight of a partially saponified polyvinyl alcohol, which is available from Denki Kagaku Kogyo Kabushikikaisha, (polymerization degree: 1,700, saponification degree: 88% by mole), 0.1 parts by weight of magnesium oxide and further 21 parts by weight of glycerin as a plasticizer were added, then Sample 5 as a film having a thickness of 60µm was manufactured. Samples 6 to 8 were manufactured in a similar manner to Sample 5 except that the amount of magnesium oxide was changed to 1, 10 and 100 parts by weight respectively.

### (Example 3) (Reference Example)

To 100 parts by weight of a partially saponified polyvinyl alcohol, which is available from Kuraray Co., Ltd. (polymerization degree: 2,400, saponification degree: 88% by mole), 10 parts by weight of magnesium hydroxide and further 8 parts by weight of glycerin as a plasticizer were added, then Sample 9 as a container having a thickness of 120µm was manufactured using a casting method. Samples 10 to 13 as a film were manufactured in a similar manner to Sample 9 except that magnesium carbonate, calcium hydroxide, calcium carbonate and zinc oxide were used instead of magnesium hydroxide respectively.

### (Example 4)

To 100 parts by weight of a carboxy-modified polyvinyl alcohol, which is available from The Nippon Synthetic Chemical Industry Co., Ltd., (polymerization degree: 1,700, saponification degree: 95% by mole), 5 parts by weight of Mg_{4.5}Al₂(OH)₁₃CO₃ 3.5H₂O, which is available from Kyowa Chemical Industry Co., Ltd., as a hydrotalcite compound, 5 parts by weight of zinc oxide and further 0.2 parts by weight of a parting agent were added, then Sample 14 as a film having a thickness of 60µm was manufactured. Sample 15 having a thickness of 60µm was manufactured in a similar manner to Sample 14 except that magnesium carbonate was used instead of hydrotalcite compound. Sample 16 as a film was manufactured in a similar manner to Sample 15 except that zinc oxide was used instead of magnesium oxide.

### (Comparative Example 1)

Sample 17 as a film having a thickness of 60µm was manufactured in a similar manner to Example 2 except that silica, which is available from Fuji Silysia Chemical Ltd., was used instead of magnesium oxide.

### (Comparative Example 2)

Sample 18 as a container having a thickness of 120µm was manufactured in a similar manner to Example 3 except that sodium carbonate was used instead of magnesium hydroxide. Sample 19 as a container was manufactured in a similar manner to Sample 18 except that magnesium chloride was used instead of sodium carbonate.

The properties of the obtained samples manufactured in Examples and Comparative Examples were evaluated as follows.

### (Evaluation of Properties)

### (Evaluation of Chlorine Resistance and Bromine Resistance)

The obtained film samples as the water-soluble sealing packaging material were cut into a size of 50mm square. On one surface, sodium dichloroisocyanurate, which is available from Tokyo Chemical Industry Co., Ltd., as a chlorine-containing compound (1) which is a halogen containing agent; trichloroisocyanuric acid , which is available from Tokyo Chemical Industry Co., Ltd., as another chlorine containing compound (2); and the Spaclean Brom 60T, which is available from Shikoku Chemicals Corporation and is trade name, as a bromine containing compound (3); were placed so as to contact with the one surface to evaluate chlorine resistance and bromine resistance respectively. They were left to stand still for a long time (6 weeks) storage test at 40°C. In the similar manner, to the obtained container Samples as the water-soluble sealing packaging material, the halogen containing agent was contacted and left to stand still for a long time storage test.

### (Solubility Test)

Before and after the long time storage test, respective Samples of the water-soluble sealing packaging material were subjected to a solubility test. The solubility test was carried out by hanging a sample of the water-soluble sealing packaging material attached to a slide mount in 800ml water stirred with a stirrer in a 1,000ml beaker at 20°C. Solubility was determined by observing the state of the film which was swollen, disrupted or completely dissolved. The solubility was determined by observing the dissolved state at the solubility test, and the solubility was rated as follows. 'A' and 'B' rankings are judged to be excellent in solubility.
A: dissolved within 5 minutes
B: dissolved within 5 minutes but there were undissolved chips measuring more than 1 mm square
C: un-dissolved within 5 minutes

The results are all shown in Table 1.

**Table 1**

| Water-soluble Sealing Packaging Material | | Composition of Inorganic Compound | | Chlorine & Bromine Resistance (Solubility) | | | |
|---|---|---|---|---|---|---|---|
| | | Inorganic Compound | Additive Amount (p. by w.) | Before Long Storage | After six Weeks Storage | | |
| | | | | | Sodium Dichloro- isocyanurate | Trichloro isocyanuric acid | 60T |
| Ex. 1 | Sample 1 | Hydrotalcite | 0.1 | A | B | B | B |
| | Sample 2 | | 1 | A | A | B | B |
| | Sample 3 | | 10 | A | A | B | B |
| | Sample 4 | | 100 | A | A | A | A |
| Ex. 2* | Sample 5 | Magnesium Oxide | 0.1 | A | B | B | B |
| | Sample 6 | | 1 | A | A | B | B |
| | Sample 7 | | 10 | A | A | A | B |
| | Sample 8 | | 100 | A | A | A | A |
| Ex.3* | Sample 9 | Magnesium Hydroxide | 10 | A | A | B | B |
| | Sample 10 | Magnesium Carbonate | 10 | A | A | B | B |
| | Sample 11 | Calcium Hydrate | 10 | A | A | B | B |
| | Sample 12 | Calcium Carbonate | 10 | A | A | B | B |
| | Sample 13 | Zinc oxide | 10 | A | A | A | B |
| Ex. 4 | Sample 14 | Hydrotalcite | 5 | A | A | A | B |
| | | Zinc Oxide | 5 | | | | |
| | Sample 15* | Magnesium Carbonate | 5 | A | A | B | B |
| | | Zinc Oxide | 5 | | | | |
| | Sample 16* | Magnesium Carbonate | 5 | A | A | B | B |
| | | Magnesium Oxide | 5 | | | | |
| Comp. Ex.1 | Sample 17 | Silica | 10 | A | C | C | C |
| Comp. Ex. 2 | Sample 18 | Sodium Carbonate | 10 | A | C | C | C |
| | Sample 19 | Magnesium Chloride | 10 | A | C | C | C |
| *Reference Examples / Samples | | | | | | | |

As is clear from Table 1, the water-soluble sealing packaging material showed an excellent solubility in water even after the long time storage test. A water-soluble sealing packaging material outside the present invention showed an excellent solubility in water before the long time storage test, but after the long time storage test, the packaging material was deteriorated under the presence of the chlorine-containing or bromine-containing compound so that the water solubility of the packaging material was lowered.

### Industrial Applicability

The water-soluble sealing packaging material can be used for individual packaging of a halogen-containing medicament, for example, everyday-use medicaments such as powdered detergents or powdered cleaning agents, medicaments for medical use such as fungicides, medicaments for agricultural industry such as insecticides, chemical herbicide, fertilizers; medicaments for industrial use such as dyestuffs; medicaments for coating industries such as colorants and dispersing agents for water-based coatings.

## Claims

1. Use of a water-soluble sealing packaging material for sealing a halogen-containing medicament comprising;
a packaging raw material that comprises 100 parts by weight of a polyvinyl alcohol resin and 0.1 to 100 parts by weight of a hydrotalcite compound as an inorganic compound being represented by the following chemical formula (1)
MₚAl₂(OH)_{2p+6-2q}A_{q} · rH₂O (1)
wherein, in the formula (1), M is magnesium, calcium and/or zinc; p and q are each positive number under the condition of 2p+6-2q>0; r is 0 or a positive number; and A is CO₃ or HPO₄;
said hydrotalcite compound being a layered double hydroxide having an anion exchange capability and able to intercalate water molecules and ions.

2. Use of the water-soluble sealing packaging material according to claim 1, wherein the polyvinyl alcohol resin is selected from the group consisting of a polyvinyl alcohol, a vinyl alcohol copolymer which is a saponified polymer from an unsaturated carboxylic acid-vinyl acetate copolymer, and a polyvinyl alcohol derivative which is an ester compound of one of the polyvinyl alcohol and the vinyl alcohol copolymer esterified with an acid anhydride, or a mixture thereof.

3. Use of the water-soluble sealing packaging material according to claim 1, wherein the packaging material is a bag formed by fusion-bonding or adhering of a film as the packaging raw material at a circumference thereof to have a bag-like shape for sealing the medicament, or a container formed by molding of the packaging raw material to have a cavity for sealing the medicament.

4. Use of the water-soluble sealing packaging material according to claim 1, wherein the medicament includes a chlorine-containing compound or a bromine-containing compound.

## Patentansprüche

1. Verwendung eines wasserlöslichen versiegelnden Verpackungsmaterials zur Versiegelung eines halogenhaltigen Medikaments, umfassend:
ein Verpackungsrohmaterial, das 100 Gewichtsteile eines Polyvinylalkoholharzes und 0,1 bis 100 Gewichtsteile einer Hydrotalcit-Verbindung als anorganische Verbindung, die durch die folgende chemische Formel (1) dargestellt wird, umfasst:
MₚAl₂(OH)_{2p+6-2q}A_{q}·rH₂O (1)
wobei in der Formel (1) M Magnesium, Calcium und/oder Zink ist; p und q jeweils positive Zahlen sind unter der Bedingung, dass 2p+6-2q > 0; r = 0 oder eine positive Zahl ist; und A = CO₃ oder HPO₄ ist;
wobei die Hydrotalcit-Verbindung ein schichtartiges Doppelhydroxid ist, das Anionenaustauschfähigkeit aufweist und Wassermoleküle und Ionen interkalieren kann.

2. Verwendung des wasserlöslichen versiegelnden Verpackungsmaterials gemäß Anspruch 1, wobei das Polyvinylalkoholharz aus der Gruppe ausgewählt ist, die aus einem Polyvinylalkohol, einem Vinylalkohol-Copolymer, bei dem es sich um ein verseiftes Polymer aus einem ungesättigte-Carbonsäure-Vinylacetat-Copolymer handelt, und einem Polyvinylalkohol-Derivat, das eine Esterverbindung entweder des Polyvinylalkohols oder des Vinylalkohol-Copolymers ist, der bzw. das mit einem Säureanhydrid verestert ist, oder einem Gemisch davon besteht.

3. Verwendung des wasserlöslichen versiegelnden Verpackungsmaterials gemäß Anspruch 1, wobei das Verpackungsmaterial ein Beutel, der durch Schweißen oder Kleben einer Folie als Verpackungsrohmaterial an einem Umfang derselben zu einer beutelartigen Form zur Versiegelung des Medikaments gebildet wird, oder ein Behälter, der durch Formen des Verpackungsrohmaterials in einer Weise, dass es einen Hohlraum zur Versiegelung des Medikaments aufweist, gebildet wird, ist.

4. Verwendung des wasserlöslichen versiegelnden Verpackungsmaterials gemäß Anspruch 1, wobei das Medikament eine chlorhaltige Verbindung oder eine bromhaltige Verbindung umfasst.

## Revendications

1. Utilisation d'un matériel d'emballage et d'étanchéité soluble dans l'eau pour sceller un médicament halogéné, comprenant :
une matière première de matériel d'emballage comprenant 100 parties en poids d'une résine d'alcool polyvinylique et 0,1 à 100 parties en poids d'un composé de type hydrotalcite en tant que composé inorganique étant représenté par la formule chimique (1) suivante :
MₚAl₂(OH)_{2p+6-2q}A_{q}·rH₂O (1)
où, dans la formule (1), M est le magnésium, le calcium et/ou le zinc ; p et q sont chacun un nombre positif à condition que 2p+6-2q > 0 ; r est 0 ou un nombre positif ; et A est CO₃ ou HPO₄ ;
ledit composé de type hydrotalcite étant un hydroxyde double lamellaire ayant la capacité d'échange d'anions et pouvant intercaler des molécules d'eau et des ions.

2. Utilisation d'un matériel d'emballage et d'étanchéité soluble dans l'eau selon la revendication 1, dans lequel ladite résine d'alcool polyvinylique est choisie dans le groupe consistant en un alcool polyvinylique, un copolymère d'alcool vinylique qui est un polymère saponifié à partir d'un copolymère d'acide carboxylique insaturé et d'acétate de vinyle, et un dérivé d'alcool polyvinylique qui est un composé ester de l'un parmi l'alcool polyvinylique et le copolymère d'alcool vinylique, estérifié avec un anhydride d'acide, ou un mélange de ceux-ci.

3. Utilisation d'un matériel d'emballage et d'étanchéité soluble dans l'eau selon la revendication 1, dans lequel le matériel d'emballage est un sachet formé par soudage thermique ou collage d'un film en tant que matière première de matériel d'emballage au niveau de la circonférence du film pour obtenir une forme de sachet pour sceller le médicament, ou un récipient formé par moulage de la matière première de matériel d'emballage pour obtenir une cavité pour sceller le médicament.

4. Utilisation d'un matériel d'emballage et d'étanchéité soluble dans l'eau selon la revendication 1, dans lequel le médicament comprend un composé chloré ou un composé bromé.
